(19) Europäisches Patentamt / European Patent Office / Office européen des brevets

(11) **EP 2 872 339 B1**

(12) **EUROPEAN PATENT SPECIFICATION**

(45) Date of publication and mention
of the grant of the patent:
**02.09.2020 Bulletin 2020/36**

(51) Int Cl.:
***B41M 5/50*** *(2006.01)*    ***B41M 1/40*** *(2006.01)*

(21) Application number: **12880991.0**

(22) Date of filing: **11.07.2012**

(86) International application number:
**PCT/US2012/046217**

(87) International publication number:
**WO 2014/011165 (16.01.2014 Gazette 2014/03)**

(54) **DISPLAY BOARD**

ANZEIGETAFEL

PLAQUE DE PRÉSENTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.05.2015 Bulletin 2015/21**

(73) Proprietor: **Hewlett-Packard Development
Company, L.P.
Spring TX 77389 (US)**

(72) Inventors:
• **PIRAYESH, Francois K.
San Diego, California 92127-1899 (US)**
• **ZHOU, Xiaoqi
San Diego, California 92127-1899 (US)**

• **EDMONDSON, David
San Diego, California 92127-1899 (US)**

(74) Representative: **ZBM Patents - Zea, Barlocci &
Markvardsen
Rambla Catalunya, 123
08008 Barcelona (ES)**

(56) References cited:
**EP-A1- 2 210 533        CH-A5- 677 467
JP-A- 2003 154 799        JP-A- 2009 508 716
US-A- 5 437 924          US-A1- 2006 078 695
US-A1- 2011 146 126       US-B2- 7 117 621
US-B2- 7 703 251**

**Description**

BACKGROUND

The global print market is in the process of transforming from analog printing to digital printing. Inkjet printing and electrophotographic printing are examples of digital printing techniques. These printing techniques have become increasingly popular for printing photographs and/or decorative art items. As examples, an image may be inkjet printed on canvas and then mounted on a wood frame, or an image may be liquid electro-photographically printed on a high gloss medium and then mounted on a metal plate.

US 2011/0146126 A1 describes a display device comprising a core structure including a three-dimensional core with a rigid board attached to each of the front and back surface, wherein respective rigid skins are applied to an exposed surface of each of the first and second rigid board.

EP 2210533 A1 relates to a support structure of a display device.

BRIEF DESCRIPTION OF THE DRAWINGS

Features and advantages of examples of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.

Fig. 1 is a back, perspective view of an example of a display board;
Fig. 2 is an enlarged perspective view of an insert to be used with an example of the display board;
Figs. 3A and 3B are enlarged side perspective views of examples of mounts to be used with an example of the display board;
Fig. 4 is a back perspective view of an example of a table top art piece formed using an example of the display board with an example of the insert and the mount;
Fig. 5 is a cross-sectional view of an example of a wall-mounted art piece formed using an example of the display board with another example of the insert and the mount;
Fig. 6 is an exploded, perspective view of an example of an art piece formed using an example of the display board; and
Fig. 7 is a front perspective view of an art piece formed using an example of the display board, where an image receiving medium is wrapped around the edges of the display board.

DETAILED DESCRIPTION

The present disclosure relates generally to display boards, and more particularly to art pieces formed using the display boards. Examples of the display board disclosed herein include a core structure that is rigid, non-bendable, and non-foldable. The rigidity of the core structure contributes to a strong frame for supporting and mounting the ultimately formed art piece. A mounting system is also disclosed herein that is compatible with the display board(s). The mounting system may be used for table top mounting of the display board or art piece, or wall mounting of the display board or art piece.

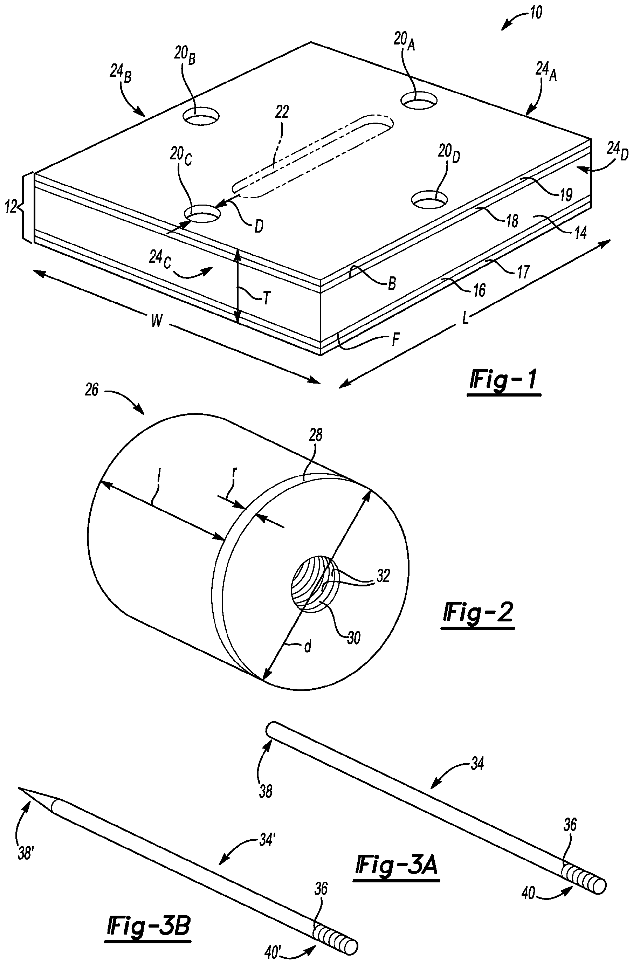

Referring now to Fig. 1, an example of the display board 10 is shown from a back, perspective view. The display board 10 includes the core structure 12, which is made up of a three-dimensional core 14, two rigid boards 16, 18 attached to opposed surfaces F, B of the three-dimensional core 14, and a rigid skin 17, 19 respectively applied to the external surfaces of the rigid boards 16, 18. More particularly, the three-dimensional core 14 includes a front surface F and a back surface B opposed to the front surface F. The first rigid board 16 is attached to the front surface F and the second rigid board 18 is attached to the back surface B. As such, the three-dimensional core 14 is sandwiched by the rigid boards 16, 18 and the rigid skins 17, 19 applied to the respective rigid boards 16, 18.

The three-dimensional core 14 may be made of any suitable material having a three-dimensional geometry. In an example, the three-dimensional geometry includes a fixed shape in the X and Y directions, and also has a size in the Z direction. Examples of suitable materials for the three-dimensional core 14 include wood or natural fiber substances/composites, polymeric materials or other synthetic materials, metals, metal alloy, inorganic compositions, or ceramics.

The three-dimensional core 14 contributes to the solid three-dimensional appearance of the display board 10, while not significantly adding weight to the display board 10. As such, the display board 10 may be relatively light weight. As an example, a 4"x6" display board 10 may have a weight of about 115 g. As another example, a 7.5"x10" display board 10 may have a weight of about 263 g. As still another example, an 11 "x14" display board 10 may have a weight of about 504 g. As yet a further example, an 11.5"x17.5" display board 10 may have a weight of about 680 g. The density of the boards 10 disclosed herein may range from about 0.45 $g/cm^2$ to about 0.6 $g/cm^2$.

The three-dimensional core 14 may have open or closed voids, pores, and/or channels. Open voids, pores, and/or channels are cells that are open to the atmosphere (e.g., the walls of the cells which define the voids, pores, and/or channels are porous), whereas closed voids, pores, and/or channels are cells that have limited opening, if any, to the atmosphere (e.g., the walls of the cells which define the voids, pores, and/or channels are closed/sealed and filled with air). In some instances, the closed void, pore, and/or channel structure may be more desirable, at least in part because the closed structure may contribute to higher stiffness and smooth continuous exterior surfaces, including face and back surfaces F and B. The closed structure may also contribute to a high bulk density.

In an example, the three-dimensional core 14 is a polymeric matrix having open or closed voids, pores, and/or channels. To form the voids, pores, and/or channels, air bubbles or air tunnels may be embedded in the polymeric matrix as described further herein.

The polymeric matrix may be formed of a thermoplastic polymer or a thermoset polymer. Some examples of materials suitable for the polymeric matrix include polyurethane, polyisocyanate, polystyrene, polyolefin, polyvinyl chloride expoxy, silicone, phenolic polymers and fluoropolymers. The polymeric matrix may also be a starch-based biodegradable polymer.

One specific example of the three-dimensional core 14 has the closed void, pore and/or channel structure and is formed of a high density polymeric void base. As used herein, the phrase "high density polymeric void base" refers to a polymeric core having the closed void, pore and/or channel structure with a density ranging from about 15 kg/m$^3$ to 60 kg/m$^3$. In an example, the density of the high density polymeric void base ranges from about 25 kg/m$^3$ to about 45 kg/m$^3$. It is believed that if the density of the core 14 is too low, the core 14 will be resilient and spongy, and will not support the mounting system disclosed herein. It is also believed that if the density of the core 14 is too high, the core 14 will inevitably increase the weight of display board 10, which may be undesirable, for example, by an end user.

One example of the high density polymeric void base is formed of polystyrene. This polystyrene-based high density polymeric void base may be made using a voiding process. In this process, polystyrene pellets/crystals and additives are fed into a heated high shearing mixer equipped with a single, double or multiple rotating screws which provide strong shearing forces. Controlled process conditions, such as high temperature and pressure, cause the polystyrene pellets/crystals and additives to mix and melt into a viscous plastic fluid. The processing temperature may be above the melting point of the polystyrene pellets/crystals, ranging from about 176°C to about 260°C. The processing pressure may range from about 4,500 PSI to about 6,500 PSI. In an example, the selected additive(s) is/are precompounded with the polystyrene pellets/crystals and are then fed into the high shearing mixer by the rotating screw(s) and exposed to the process conditions which result in the formation of the viscous plastic fluid.

The additive(s) used in making the high density polymeric void base include fire retardant agents, anti-degradation agents, lubricants, release agents, and other processing aids. The fire retardant agents can be selected from metal containing oxides, hydroxides or borates, such as antimony oxide, alumina trihydroxide (ATH), magnesium hydroxide, and zinc borate; or organohalogens, such as chlorinated paraffins, decabromodiphenyl ether, decabromodiphenyl ethane (DPDPE), polybrominated diphenyl ethers (PBDEs), tetrabromobisphenol A (TBBPA), and hexabromocyclododecane (HBCD); or organo-nonhalogens, such as phosphate esters, phosphonates, and phosphinates; or nitrogen-containing organics, such as melamine and melamine cyanurate. The efficiency of fire retardant agents may be enhanced by adding a synergist, such as antimony trioxide, antimonite, and pentoxide. Other suitable fire retardant agents include tris(2,3-dibromopropyl) phosphate or tri-o-cresyl phosphate. The amount of the fire retardant agent that may be used ranges from about 5 wt% to about 30 wt% of the total wt% of the core 14. Anti-degradation agents can be selected from inorganometal and organo-metal compounds, such as silica, zinc oxide, magnesium oxide, and dibutyl tin maleate. The amount of the anti-degradation agent that may be used ranges from about 0.02 wt% to about 2% of the total wt% of the core 14. Examples of suitable lubricants include stearate compounds, such as calcium stearate, magnesium stearate and barium stearate, or non-volatile oils, such as white mineral oil. Lubricant(s) may be added in an amount ranging from about 0.002 wt% to about 0.5% of the total wt% of the core 14.

Once the viscous plastic fluid is formed, a voiding agent, which assists in creating the voids, pores, and/or channels, may be compressed into the viscous plastic fluid. In an example, the voiding agent is injected into the viscous plastic fluid inside the shearing mixer by a high pressure metering system under an elevated pressure and temperature of greater than 3,000 PSI and 176°C, respectively.

It is to be understood that the voiding agent is embedded inside the viscous plastic fluid and is subsequently released after the viscous plastic fluid passes through a die. The embedding and subsequent release of the voiding agent generates a controlled void, pore and/or channel structure. As such, the voiding agent may be selected from materials which can be compressed into the viscous plastic fluid at the elevated temperature and pressure, and then released when the viscous plastic fluid is pushed out of a die and the pressure is equal to the atmosphere. Examples of the voiding agent include alkanes and alkenes, such as ethane, ethylene, propane, propylene, butane, butylene, isobutane, pentane, neopentane, isopentane, hexane, heptane, or any mixture of these components. Gases, such as nitrogen gas, carbon dioxide, and/or water vapor, may be used as the voiding agent. The amount of the voiding agent to be added depends, at least in part, on the final density of the core 14 to be formed. In an example, the amount of voiding agent ranges from about 0.01 parts to about 8 parts per 100 parts of the viscous plastic fluid.

The hot, thick viscous plastic fluid containing the compressed voiding agent is then forced in a continuous process by the rotating screws through a die. As the material emerges from the die, the voiding agent is released, which expands the material and forms a polymeric foam with the closed void, pore and/or channel structure. The high density polymeric void base may then be shaped, cooled, and trimmed to dimension.

The size and shape of the cells, and the voids or pores defined by the cells, in the core 14 may vary. The shapes may range, for example, from spheres, to polygons, to dodecahedrons. In addition, the cells may be elongated in a certain direction as the polymer is foamed. Elongation occurs before the foam completely solidifies. In an example, the cells may be deformed by the pressure of the screw, which changes the shape to an oval or elipse. The elongation of the cells results in the channel structure.

As mentioned above, first and second rigid boards 16, 18 are respectively attached to the front and back faces F, B of the three-dimensional core 14. Examples of suitable rigid boards 16, 18 include metal sheets, paper boards, plastic sheets, composite sheets, or any other sheet that provides a desirable rigidness to the board 16, 18. In an example, the rigid boards 16, 18 are cut from a composite sheet, which is an engineered wood product formed by breaking down hardwood or softwood residuals into wood fibers in, for example, a defibrator, combining the wood fibers with wax and resin binder to form a mixture, and forming panels with the mixture under high temperature and pressure conditions. In an example, the composite sheet rigid boards 16, 18 provide strength, rigidness, and a protective layer to the core 14.

In order to avoid deformation as a result of moisture absorption, a water-proof rigid skin 17, 19 may be applied to the exterior surfaces of the rigid boards 16, 18. The rigid skin 17, 19 may also render the edges of any aperture(s) $20_A$, $20_B$, $20_C$, $20_D$ and/or slot(s) 22 formed in the display board 10 smooth. An example of the water-proof rigid skin 17, 19 is made of thermal setting polymeric resin, such as melamine resin and phenol formaldehyde resin, which can be applied to the exterior surfaces of the respective rigid boards 16, 18 under a hot press.

Both the rigid boards 16, 18 and the three- dimensional core 14 provide the three-dimensional appearance and rigidness to the display board 10, which is non-bendable, non-foldable, and light weight. Rigidness of the respective components may be defined by the Brinell hardness of each component 14, 16, 18. The Brinell scale characterizes the indentation hardness of materials through the scale of penetration of an indenter, loaded on a material test-piece. In an example, indention hardness may be tested using a 10 mm (0.39 in) diameter steel ball as an indenter with 3,000 kgf (29 kN or 6,600 lbf) force. It is to be understood that smaller forces may be used, for example, for testing softer materials. Additionally, a tungsten carbide ball may be used, for example, for testing harder materials. Brinell hardness may be tested according to ASTM (f.k.a. the American Society for Testing and Materials) test method E10-08. During hardness testing, the indentation is measured, and hardness (BHN) may be calculated according to the following equation:

$$BHN = \frac{2P}{\pi D(D - \sqrt{(D^2 - d^2)})} \qquad (1)$$

Where P is the applied force (kgf), D is the diameter of the indenter (mm), and d is the diameter of the indentation (mm).

In an example, the BHN of the core 14 ranges from about 0.05 to about 0.3, and the BHN of each rigid board 16, 18 ranges from about 4 to about 6.5. The ratio of the BHN of the rigid board 16 or 18 to the BHN of the core 14 ranges from about 130 to about 10. In another example, the ratio of the BHN of the rigid board 16 or 18 to the BHN of the core 14 ranges from about 80 to about 20.

The first and second rigid boards 16, 18 may be respectively attached to the front and back faces F, B of the core 14 using an adhesive (not shown). The adhesive may be a solvent-based adhesive, or a water-based adhesive, or a nonsolvent based adhesive (such as a hot melt adhesive). Solvents suitable for the solvent-based adhesive include any organic solvent that is volatile or reactive, such as heptanes, toluene, ethyl acetate, pentane-2,4-dione, and alcohols. In some instances, it may be desirable to utilize an aqueous-based water soluble and/or water dispersible adhesive. In an example, the adhesive is formed of a synthetic polymer with a weight average molecular weight ranging from about 200,000 to about 800,000 when the structure is linear, or ranging from about 300,000 to about 1,500,000 when the structure is branched or cross-linked. The adhesive may also have a pressure sensitive nature. For example, the adhesive may have a glass transition temperature ($T_g$) ranging from about -70°C to about -40°C, and a peeling strength equal to or greater than 20 Newton/$cm^2$ (e.g., as measured according to ASTM 3330M using an INSTRON® tester).

Suitable examples of the adhesive are polyacrylates, polyvinyl ethers, silicone resins, polyacrylic resins, acrylic latex, elastic hydrocarbon polymers (e.g., nitrile rubbers, butyl rubbers, polyisobutylenes, polyisoprenes, etc.), ethylene-vinyl acetate copolymers, or styrene block copolymers (e.g., styrene-butadiene-styrene (SBS), styrene-ethylene-styrene, styrene-butylene-styrene, styrene-ethylene, or styrene-propylene). Other suitable examples of the adhesive may be polymers of acrylate addition monomers, such as C1 to C12 alkyl acrylates and methacrylates (e.g., methyl acrylate, ethyl acrylate, n-propyl acrylate, isopropyl acrylate, n-butyl acrylate, isobutyl acrylate, sec-butyl acrylate, tert-butyl acrylate, 2-ethylhexyl acrylate, octyl acrylate, methyl methacrylate, ethyl methacrylate, n-propyl methacrylate, isopropyl methacrylate, n-butyl methacrylate, isobutyl methacrylate, sec-butyl methacrylate, and tert-butyl methacrylate); aromatic monomers (e.g., styrene, phenyl methacrylate, o-tolyl methacrylate, m-tolyl methacrylate, p-tolyl methacrylate, and benzyl methacrylate); hydroxyl containing monomers (e.g., hydroxyethylacrylate and hydroxyethylmethacrylate); carboxylic acid containing monomers (e.g., acrylic acid and methacrylic acid); vinyl ester monomers (e.g., vinyl acetate, vinyl propionate, vinylbenzoate, vinyl pivalate, vinyl-2-ethylhexanoate, and vinyl-versatate); vinyl benzene monomers; and C1-C12 alkyl acrylamide and methacrylamide (e.g., t-butyl acrylamide, sec-butyl acrylamide, N,N-dimethylacrylamide).

The adhesive may be a copolymer of at least two of the monomers listed herein. In an example, the molecular structure of the formed copolymer has soft segments ($T_g$ ranging from about -70°C to about -20°C) and small hard segments ($T_g$ ranging from about -10°C to about 100°C). The copolymer may also include functional monomers, i.e., the chemical groups on the molecular chain can react to form a cross-linked structure. Examples of functional monomers include methacrylic acid, acrylic acid, glycidyl methacrylate, and hydroxyethyl acrylate.

In still another example, the adhesive includes a compound having a structure of unsaturated rings. Examples of such compounds include glycerol ester of abietic acid, pentaerythritol ester of abietic acid, and terpene resins derived from alfa-pinene and beta-pinene.

The adhesive may be applied to have a coat weight ranging from 25 gsm to about 60 gsm. If the adhesive layer coat weight is less than 25 gsm, the bond strength will decrease, and adhesion failure may result. The adhesive may be applied to the front surface F and the back surface B, and/or to the respective surfaces of the rigid boards 16, 18, and then the rigid boards 16, 18 may be aligned with the respective surfaces F, B and secured thereto.

The core structure 12 may have any desirable shape and/or dimensions, depending, at least in part, on the desired art piece to be formed. As illustrated, the core structure 12 may be three-dimensional, having a thickness T, a length L (or multiple side lengths), a width W (or multiple side widths), a diameter (not shown), or combinations thereof. From a front or back view, the core structure 12 may resemble a circle, a triangle, a square, a rectangle, a pentagon, a hexagon, or any other polygon. As examples, the thickness T may range from about 19 mm (0.75 inches) to about 38 mm (1.5 inches). As other examples, the side dimensions (e.g., WxL shown in Fig. 1) may be 4"x6", 5"x7", 8"x10", 11"x14", 18"x20", 20"x30", or 30"x40".

The display board 10 also includes more than one aperture 20 formed in the back side of the board 10. More particularly, the aperture 20 extends through the rigid skin 19, through the second rigid board 18 and into the core 14 a predetermined depth that is less than the thickness of the core 14. In an example, the total depth of the aperture 20 (i.e., from the outer surface of the second rigid board 18 to bottom of the aperture 20) ranges from about 12 mm to about 13 mm. The total depth may be increased or decreased depending, at least in part, on the thickness T of the core structure T.

Any number of apertures 20 may be formed in the core structure 12. As shown in Fig. 1, four apertures $20_A$, $20_B$, 20c, $20_D$ are formed in the core structure 12. The number and positioning of the apertures $20_A$, $20_B$, $20_C$, $20_D$ may depend, at least in part, on the shape of the display board 10 and potential mounting positions for the display board 10. For example, the positioning of apertures $20_A$ and $20_C$ enable the rectangular display board 10 shown in Fig. 1 to be mounted on a wall or a table top so that either of the sides $24_A$ or $24_C$ corresponding with the width W becomes the top of the display board 10. Similarly, the positioning of apertures $20_B$ and $20_D$ enable the rectangular display board 10 shown in Fig. 1 to be mounted on a wall or a table top so that either of the sides $24B_A$ or $24_D$ corresponding with the length L becomes the top of the display board 10. By providing multiple apertures $20_A$, $20_B$, $20_C$, $20_D$ which enable different mounting positions, a user of the display board 10 may select the orientation (e.g., portrait, landscape, etc.) of an image to be secured thereto.

It is to be understood that differently shaped core structures 12 may have different numbers of apertures 20 formed therein. For example, a triangular shaped core structure 12 may have three apertures formed therein, a large rectangular shaped core structure 12 may have eight or more apertures formed therein (e.g., two or more along each side $24_A$, $24_B$, $24_C$, $24_D$), a pentagon shaped core structure may have five apertures formed therein, etc.

The following are a few examples of suitable locations for the four apertures $24_A$, $24_B$, $24_C$, $24_D$ shown in Fig. 1 for differently sized rectangular display boards 10. For a display board 10 having a length of 7" and a width of 5", each of the apertures $24_A$, $24_B$, $24_C$, $24_D$ may be located about 23 mm from the respective adjacent sides $24_A$, $24_B$, $24_C$, $24_D$. In this example, the apertures $20_A$ and $20_C$ may be located about 53 mm from each of the sides $24_B$ and $24_D$ and the apertures $20_B$, $20_D$ may be located about 79 mm from each of the sides $24_A$ and $24_C$. For a display board 10 having a length of 10" and a width of 8", each of the apertures $24_A$, $24_B$, $24_C$, $24_D$ may be located about 23 mm from the respective adjacent sides $24_A$, $24_B$, $24_C$, $24_D$. In this example, the apertures $20_A$ and $20_C$ may be located about 92 mm from each of the sides $24_B$ and $24_D$ and the apertures $20_B$, $20_D$ may be located about 117mm from each of the sides $24_A$ and $24_C$. For a display board 10 having a length of 14" and a width of 11", each of the apertures $24_A$, $24_B$, $24_C$, $24_D$ may be located about 23 mm from the respective adjacent sides $24_A$, $24_B$, $24_C$, $24_D$. In this example, the apertures $20_A$ and $20_C$ may be located about 130 mm from each of the sides $24_B$ and $24_D$ and the apertures $20_B$, $20_D$ may be located about 168 mm from each of the sides $24_A$ and $24_C$.

The apertures $20_A$, $20_B$, $20_C$, $20_D$ may be formed in the core structure 12 using any suitable method, including drilling or punching. The apertures $20_A$, $20_B$, $20_C$, $20_D$ may have any shape that is complementarily shaped with an insert 26 (shown in Fig. 2) that is to be inserted into the aperture $20_A$, $20_B$, 20c, $20_D$. In an example, the shape of the apertures $20_A$, $20_B$, $20_C$, $20_D$ and the corresponding insert 26 is cylindrical or a star shape.

Referring now to Figs. 1 and 2 together, the insert 26 (shown in Fig. 2) may be designed to fit into any of the apertures $20_A$, $20_B$, $20_C$, $20_D$ (shown in Fig. 1) of the display board 10. Each of the apertures $20_A$, $20_B$, $20_C$, $20_D$ has a diameter D. In an example, the diameter D ranges from about 19 mm to about 22 mm. The diameter D may be the same or different for any of the apertures $20_A$, $20_B$, $20_C$, $20_D$. The insert 26 has a diameter d that is slightly larger than the diameter D, but is within less than 1 mm of the diameter D. In an example, the ratio of the diameter D of the aperture $20_A$, $20_B$, $20_C$, $20_D$ to the diameter d of the insert 26 ranges from 0.93 to 0.97.

It is to be understood that even though the diameter d is slightly larger than the diameter D, the insert 26 is formed of a flexible material that can be pushed (with a force applied by a hand or a mechanical tool) into the aperture $20_A$, $20_B$, $20_C$, $20_D$. In an example, the insert 26 is formed of a rubber material having a hardness ranging from about 70 to about 95, or from about 75 to about 90, as determined using the test method ASTM Test Method D2240Type A. This characteristic of the insert 26 enables the insert 26 to be placed into the aperture $20_A$, $20_B$, $20_C$, $20_D$ while also providing the insert 26 with the desirable strength to support a mount (shown and described in reference to Figs. 3A and 3B). In an example, the insert 26 is formed of synthetic rubber. Examples of suitable rubber materials include butadiene rubber, stryrene butadiene rubber, acrylonitrile butadiene styrene rubber, nitrile rubber, nitrile rubber/PVC blends, chloroprene rubber, isoprene rubber, ethylene-propylene rubber, acrylic rubber, polyfluorphosphazene rubber, polysiloxane rubber, polyurethane rubber, polysulfide rubber, and polynorbornene rubber.

The insert 26 may have a smooth surface or a textured surface. Examples of suitable textured surfaces include sand paper-like textures, grainy or granular textures, dot-like textures, etc. In some instances, the textured surface may be desirable in order to increase the friction between the surface of the insert 26 and the surface of the aperture $20_A$, $20_B$, $20_C$, $20_D$.

The length I of the insert 26 may depend, at least in part, on the total depth of the aperture $20_A$, $20_B$, $20_C$, $20_D$. In an example, the length I ranges from about 12 mm to about 14 mm. If an edge 28 of the insert is rounded is rounded, this portion may not be included in the length I. In an example, the radius of the edge 28 may be about 2 mm. The edge 28 may also be sharp, having a corner radius of 0.

Referring now to Figs. 2, 3A, and 3B, some examples of the display board 10 include the insert 26 (an example of which is shown in Fig. 2) and a mount 34, 34' (examples of which are respectively shown in Figs. 3A and 3B). Collectively, the aperture $20_A$, $20_B$, $20_C$, $20_D$, the insert 26, and the mount 34, 34' may be referred to as the mounting system.

As illustrated in Fig. 2, the insert 26 includes a mount receiving portion 30. In an example, the mount receiving portion 30 may be drilled into the insert 26 in a desirable position. In an example, the mount receiving portion 30 is positioned at or near the center of the insert 26. In other examples, the mount receiving portion 30 may be offset from the center of the insert 26. The insert 26 and mount receiving portion 30 may be formed simultaneously via an injection molding technique.

The mount receiving portion 30 is configured to removably receive the mount 34, 34', or a nail. In an example, the mount receiving portion 30 has female (or internal) threads 32 formed therein that accept the male (or external) threads 36 (i.e., screw) formed on one end 40, 40' of the mount 34, 34'. In an example, the female threads 32 are 10-32 thru threads, and the male threads 36 are 10-32 x 8 mm long threads. The female threads 32 may be formed using a tap.

Referring now to Fig. 3A and 3B, two examples of the mount 34, 34' are depicted. The mount 34 shown in Fig. 3A may be a stand mount that is suitable for propping up the display board 10, for example, on a table top. The mount 34' shown in Fig. 3B may be a wall mount that is suitable for mounting the display board 10 to a wall.

The mounts 34, 34' may be formed of any suitable material, including aluminum, titanium, steel or stainless steel, brass, or plastics (e.g., polytetrafluoroethylene, PTFE). The dimensions of the mount 34, 34' may depend, at least in part, on the size of the display board 10 and the dimensions of the mount receiving portion 30. In an example, the length of the mount 34, 34' ranges from about 80 mm to about 90 mm, and the diameter of the mount 34, 34' ranges from 1 mm to about 10 mm. In another example, the diameter of the mount 34, 34' ranges from about 4 mm to about 5 mm. In an example, the length is about 87.6 mm and the diameter is about 4.8 mm.

Each of the mounts 34 and 34' has two opposed ends 38, 40 and 38', 40'. As mentioned above, the ends 40, 40' are formed with male threads 36 that are compatible with female threads 32 of the mount receiving portion 30 of the insert 26. As such, the ends 40, 40' are screws. The other of the opposed ends 38, 38' may be rounded or sharp. Fig. 3A illustrates the rounded tip, and Fig. 3B illustrates the sharp tip. The radius of the rounded tip may range from about 0.5 mm to about 5 mm, or from about 1 mm to about 3 mm. In an example, the radius of the rounded tip is about 2 mm.

The mount 34, 34' may be made by any suitable method. In an example, an automated machine may be used to manufacture the mount 34, 34'.

Referring back to Fig. 1, the display board 10 may include a slot 22 formed in the back side through the rigid skin 19, through the second rigid board 18 and into the core 14. The depth of the slot 22 does not extend through the thickness of the core 14. The slot 22 may be configured to store the mount 34 or 34' therein. As such, the dimensions of the slot 22 may depend upon the dimensions of the mount 34, 34'. It is desirable that the mount 34, 34' be readily removable (e.g., by flipping the board 10 or using one's fingers) from the slot 22 when it is desirable to mount the display board 10. While the slot 22 is shown near the center of the board 10 in Fig. 1, it is to be understood that the slot 22 may be formed at any desirable location that does not interfere with the apertures $20_A$, $20_B$, $20_C$, $20_D$. For example, the slot 22 may be formed between an aperture $20_A$, $20_B$, $20_C$, $20_D$ and the edge of the display board 10.

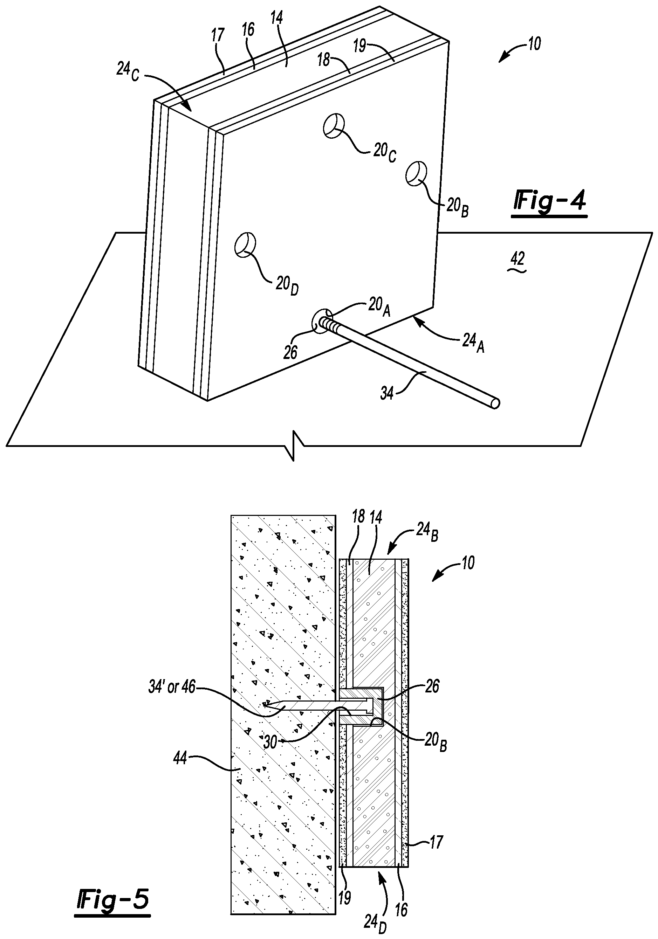

Figs. 4 and 5 illustrate two examples of the display board 10 being mounted. While an art piece formed using the display board 10 is not shown in these figures, it is to be understood that art pieces may be mounted in the same manner.

In Fig. 4, the display board 10 is used as a stand, which is positioned on a table top 42. Any flat or relatively flat surface is meant to be included by the phrase "table top." For example, table top may include the surface of a table, dresser, mantle, desk, shelf, etc.

In this example, a user determines a desirable orientation for the display board 10. This may depend, at least in part, upon an image that is to be mounted to the front of the display board 10. In the example shown in Fig. 4, it is desirable that the side $24_A$ be the bottom of the stand and that the side $24_C$ be the top of the stand. As such, in this example, aperture $20_A$ is selected as the mounting system aperture. It is to be any of the other apertures $20_B$, $20_C$, $20_D$ may be selected instead.

In one example of mounting the display 10 as a stand, the insert 26 may be inserted (e.g., pushed) into the selected aperture $20_A$. After the insert 26 is securely positioned within the selected aperture $20_A$, the mount 34 may be screwed into the mount receiving portion 30 of the insert 26. Once the mount 34 is tightened within the insert 26, the display board 10 may be positioned to stand on the table top 42. As shown in Fig. 4, the rounded end 38 rests on the table top 42 to support the display board 10.

In another example of mounting the display 10 as a stand, the mount 34 may first be screwed into the insert 26. The insert 26, having the mount 34 securely positioned therein, may then be pushed into the selected aperture $20_A$. Once the insert 26 is positioned within the aperture $20_A$, the display board 10 may be positioned to stand on the table top 42, with the rounded end 38 resting on the table top 42 as shown in Fig. 4.

In Fig. 5, the display board 10 is mounted to a wall 44. The wall 44 may be any hard wall, such as a concrete wall, a brick wall, or a hard wood wall, or the wall 44 may be any soft wall, such as a dry wall, a fiber wall, or a soft wood wall. Similar to table top mounting, in this example, a user determines a desirable orientation for the display board 10. Again, this may depend, at least in part, upon an image that is to be mounted to the front of the display board 10. In the example shown in Fig. 5, it is desirable that the side $24_D$ be the bottom of the wall-mounted display and that the side $24_B$ be the top of the wall-mounted display. As such, in this example, aperture $20_B$ is selected as the mounting system aperture. It is to be any of the other apertures $20_A$, $20_C$, $20_D$ may be selected instead.

In one example of mounting the display 10 on the wall 44, the insert 26 may be inserted (e.g., pushed) into the selected aperture $20_B$. After the insert 26 is securely positioned within the selected aperture $20_B$, the mount 34' may be screwed into the mount receiving portion 30 of the insert 26. Once the mount 34' is tightened within the insert 26, the pointed end 38' may be pushed into the wall 44. When the mount 34' is fully inserted, the display board 10 hangs on the wall 44. This mounting method may be desirable when a soft wall is the mounting surface.

In another example of mounting the display 10 on the wall 44, the mount 34' may first be screwed into the insert 26. The insert 26, having the mount 34' securely positioned therein, may then be pushed into the selected aperture $20_B$. Once the insert 26 is positioned within the aperture $20_B$, the pointed end 38' of the mount 34' may be pushed into the wall 44. When the mount 34' is fully inserted, the display board 10 hangs on the wall 44. This mounting method may also be desirable when a soft wall is the mounting surface.

In still another example of mounting the display 10 on the wall 44, a wall mount 46, such as a nail, may be used instead of the mount 34'. This mounting method may be desirable when a hard wall is the mounting surface. The wall mount 46 may be hammered or otherwise pounded into the wall 44 at a desirable position. The insert 26, which is positioned into the selected aperture $20_B$, may be pushed so that the portion of the wall mount 46 sticking out of the wall 44 is inserted into the mount receiving portion 30 of the insert 26. Since the insert 26 is already positioned in the selected aperture $20_B$ of the display board 10, pushing the wall mount 46 into the insert 26 mounts the display board 10 on the wall 44.

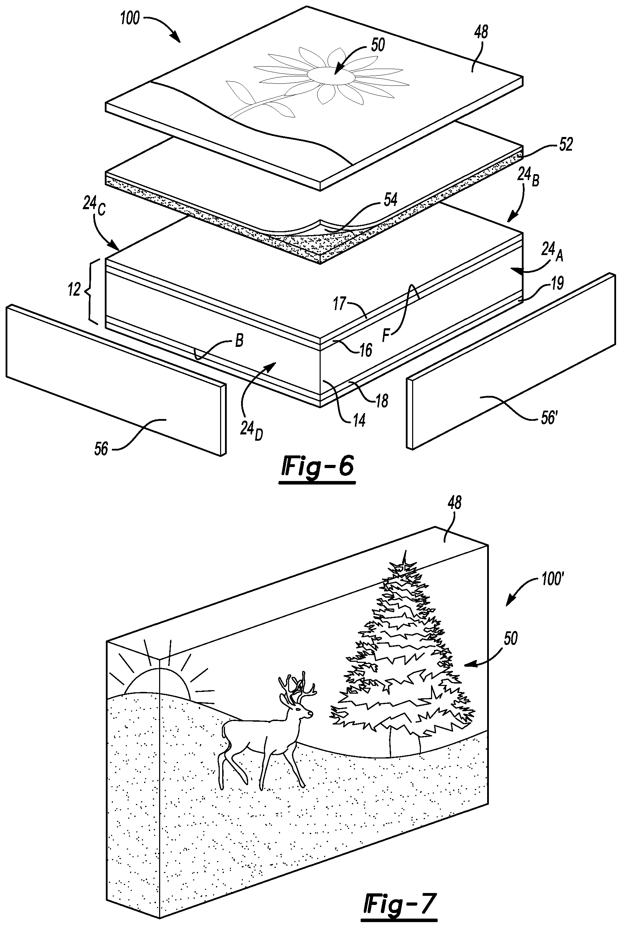

Referring now to Fig. 6, an exploded view of an art piece 100 formed using an example of the display board 10 is disclosed herein. Generally, the art piece 100 includes an image receiving medium 48 secured to at least the first rigid board 16 of the display board 10.

It is to be understood that the apertures $20_A$, $20_B$, $20_C$, $20_D$, the insert 26, and the mount 34, 34', 46 are not shown in this view. It is to be further understood that these components may be formed and utilized in the same manner as previously described herein.

The image receiving medium 48 may be a foldable material which has a specific surface that is able to receive a digital image 50 with high print quality. By foldable, it is meant that the image receiving medium 48 may be bent back to any desirable degree along the display board 10 edges. In some instances, it may be desirable to fold the medium 48 so that it covers at least the perimeter of the display board 10 (see, e.g., Fig. 7).

The specific surface may be made by coating or depositing a digital ink/toner receiving layer onto the outermost surface of a base substrate. In this example, coating or depositing refers to the application of a specifically formulated chemical composition onto the outermost surface of the base substrate of the image receiving medium 48 by a suitable process which includes any type of coating process. The specific surface may also be made by surface treating the base substrate via a physical and/or chemical process (e.g., corona treatment, plasma grafting polymerization and/or acid etching). In this example, surface treating refers to a method for altering the surface structure or morphology chemically and/or physically without applying any foreign composition to cover the surface of the base substrate. The surface treating method modifies the nature of the base substrate surface by changing the surface morphology or changing the surface chemical functional groups.

In an example, the image receiving medium 48 includes a cellulose paper base, and the outermost surface of the cellulose paper base is surface functionalized with a digital ink/toner receiving layer. The composition of the digital ink/toner receiving layer may include binder(s) (e.g., water-based binders such as polyvinyl alcohol, styrene-butadiene emulsion, acrylonitrile-butadiene latex, or combinations thereof) and inorganic pigment particle(s) (e.g., clay, kaolin, calcium carbonate, or combinations thereof).

The digital ink/toner receiving layer may be subjected to an embossing treatment or calendering process to create a desirable surface texture which is represented by a lay pattern. "Lay" is a measure of the direction of the predominant machining pattern. A lay pattern is a repetitive impression created on the surface of a part. The lay patterns created on the image receiving medium 48 include, for example, vertical patterns, horizontal patterns, radial patterns, circular patterns, isotropic patterns and cross hatched patterns. In an example of a calendering process, the medium 48 is passed through a nip under pressure, where a roll contacts the outermost surface of the medium 48. The roll is etched with a surface pattern or is matted, and a mirror image of the pattern/matte is transferred to the medium 48.

In another example, the image receiving medium 48 is made of a foldable material based on a polymeric film. Examples of suitable polymeric films include polyolefin films (e.g., polyethylene and polypropylene films), polycarbonate films, polyamide films, polytetrafluoroethylene (PTFE) films. These polymeric films can be used alone, or they can be co-extruded with another material, such as cellulose paper, to form a foldable image receiving medium. In some examples, the polymeric film surface is pre-coated with an example of the digital ink/toner receiving layer disclosed herein and/or is surface treated to improve the ink reception and toner adhesion.

In yet another example, the image receiving medium 48 is made of a foldable ductile metal foil. The metal foil may be a pure metal and/or a metal alloy. In some examples, the metal foil surface is pre-coated with an example of the digital ink/toner receiving layer disclosed herein and/or is surface treated to improve the ink reception or toner adhesion.

Any of the digital ink/toner receiving layers of the ink receiving medium 48 disclosed herein may include components that absorb light in the ultraviolet (UV) and violet region (200 nm to 380 nm) of the electromagnetic spectrum, and re-emit light in the blue region (400 nm to 490 nm). The chemical compounds which are able to absorb and then re-emit include those that have the structure of any of the following: triazine-stilbenes (di-, tetra- or hexa-sulfonated); coumarins; imidazolines; diazoles; triazoles, benzoxazolines; or biphenyl-stilbenes. Any of the digital ink/toner receiving layers disclosed herein may also include luminous materials. As an example, when illuminated by the particular wavelength(s) of light for a particular amount of time, the luminous materials will exhibit a specific light effect (e.g., photoluminescence) after the light is removed. Some examples of the luminous materials include Tritium, LumiNova, and Super LumiNova.

As mentioned above, the image 50 may be created using any suitable digital printing technique, such as digital inkjet printing, laserjet printing, electrophotographic printing, etc. Digital printing provides superior capability to create images 50 with excellent image quality.

It is believed that the durability of the printed image 50 may be the result of the combination of the medium 48 and the ink or toner that is used. For example, a medium i) including a digital dry and/or liquid toner receiving layer or ii) having been surface treated may be desirable when digital electrophotographic printing is used with toners that contain a durable colorant and UV, light and ozone fastness resin binders. In another example, a durable printed image is formed when a pigment inkjet ink is printed, using inkjet technology, onto a micro-porous image receiving medium. In this example, a pigment or any number of pigment blends may be provided in the inkjet ink formulation to impart color to the ink. As such, the pigment may be any number of desired pigments dispersed throughout the resulting inkjet ink. More particularly, the pigment included in the inkjet ink may include self-dispersed (surface modified) pigments, or pigments accompanied by a dispersant.

In the example shown in Fig. 6, once the image 50 is digitally printed on the image receiving medium 48, the image receiving medium 48 is aligned with and secured to the rigid skin 17. Any suitable securing mechanism may be used to directly attach the image receiving medium 48 to the rigid skin 17. Example securing mechanisms include an adhesive, securing tabs or corner mounts (e.g., positioned on the corners of the first rigid board 16), or any other suitable securing or fastening mechanism.

Fig. 6 illustrates an adhesive 52 as the securing mechanism. Any of the adhesives previously described herein may be used for adhesive 52. The adhesive 52 may be pre-applied to the rigid skin 17 applied to the first rigid board 16 or may be positioned on the rigid skin 17 while making the art piece 100. In an example, the adhesive 52 is applied directly onto a release liner 54, and then the adhesive-lined release liner 52, 54 is laminated onto the rigid skin 17 using a laminator. In another example, a user positions a double sided adhesive 52 with the release liner 54 in position on one side onto the rigid skin 17. The release liner 54 may protect the adhesive 52 from contamination and from prematurely adhering.

The release liner 54 may include a substrate and a release coating deposited on the substrate. The substrate may be a cellulose paper and/or a polymeric film (which may be transparent), such as polyethylene, polypropylene or polyethylene terephthalate (PET). The release coating is made of material(s) that is/are readily able to delaminate from the adhesive 52, and does not migrate or transfer to the released material (i.e., adhesive 52) to any significant degree. Examples of the release coating of the release liner 54 include polyacrylates, carbamates, polyolefins, fluorocarbons, chromium stearate complexes and silicones. In one example, the silicone release coating may be desirable, at least in part because it can easily be applied on various substrates and can be cured into a polydimethylsiloxane (PDMS) network, which limits migration into an adhesive matrix. Silicones may also allow substantially lower release forces than other materials.

When it is desirable to adhere the image receiving medium 48, the release liner 54 may be removed, and the image receiving medium 48 may be aligned with and pressed on the adhesive 52. After the image receiving medium 48 is adhered to the adhesive 52, rubber rollers may be used to apply force to the adhered materials to remove any air bubbles entrapped between the adhered materials. In the example shown in Fig. 6, if edges of the image receiving medium 48 extend beyond the edges of the rigid skin 17, such edges may be cut off or otherwise removed.

Fig. 6 also illustrates trim pieces 56, 56' that may be adhered to the sides $24_A$, $24_B$, $24_C$, $24_D$ such that the perimeter of the cores structure 12 is covered. While two trim pieces 56, 56' are shown in Fig. 6, it is to be understood that in this example, one trim piece 56, 56' is adhered to each one of the sides $24_A$, $24_B$, $24_C$, $24_D$. The trim pieces 56, 56' may be adhered using any of the adhesives described herein, or any other suitable adhesive. In an example, an ethylene-vinyl acetate copolymer hot melt adhesive may be used to adhere the trim piece(s) 56, 56'. In another example, a single trim piece covers each side $24_A$, $24_B$, $24_C$, $24_D$ of the core structure 12. In still another example, a single trim piece 56 may be configured to cover some sides (e.g., $24_C$ and $24_D$), while another single trim piece 56' may be configured to cover the other sides (e.g., $24_A$ and $24_B$).

The trim pieces 56, 56' may be flexible plastic materials (polyvinyl chloride), wood materials, veneers, metal materials, or the like. The trim pieces 56, 56' may be any desirable color (e.g., color dyed). The trim pieces 56, 56' may also or otherwise be textured (e.g., embossed) and/or coated via metal sputtering.

Referring now to Fig. 7, another example of an art piece 100' formed using the display board 10 is depicted. This example is similar to the art piece 100, except that the foldable image receiving medium 48 is wrapped around the sides $24_A$, $24_B$, $24_C$, $24_D$ of the core structure 12. In this example, adhesive may be present on the sides $24_A$, $24_B$, $24_C$, $24_D$ of the core structure 12 in order to secure the image receiving medium 48 thereto. In one example, the image receiving medium 48 include suitable cuts in the corners or at the intersections of two sides so that the medium 48 can be readily folded around the sides $24_A$, $24_B$, $24_C$, $24_D$ of the core structure 12. It is to be understood that the foldable image receiving medium 48 may be configured so that when folded and applied to the display board 10, defects, such as cracks, do not form.

In some of the examples disclosed herein, no additional layers are added to the art pieces 100, 100'. For example, the art pieces 100, 100' may be formed without lamination sheets, without transparent sheets covering the image receiving medium, without mats, etc.

It is to be understood that the ranges provided herein include the stated range and any value or sub-range within the stated range. For example, a range from about 25 kg/m$^3$ to about 45 kg/m$^3$ should be interpreted to include not only the explicitly recited limits of about 25 kg/m$^3$ to about 45 kg/m$^3$, but also to include individual values, such as 30 kg/m$^3$, 34.5 kg/m$^3$, 40 kg/m$^3$, etc., and sub-ranges, such as from about 30 kg/m$^3$ to about 40 kg/m$^3$, from about 29 kg/m$^3$ to about 44 kg/m$^3$, etc. Furthermore, when "about" is utilized to describe a value, this is meant to encompass minor variations (up to +/- 10%) from the stated value.

In describing and claiming the examples disclosed herein, the singular forms "a", "an", and "the" include plural referents unless the context clearly dictates otherwise.

While several examples have been described in detail, it will be apparent to those skilled in the art that the disclosed examples may be modified. Therefore, the foregoing description is to be considered non-limiting.

**Claims**

1. A display board (10), comprising:

   a core structure (12), including:

   a three-dimensional core (14) having a front surface (F) and a back surface (B);
   a first rigid board (16) attached to the front surface (F);
   a second rigid board (18) attached to the back surface (B);; and
   respective rigid skins (17, 19) applied to an exposed surface of each of the first rigid board (16) and the second rigid board (18);

   multiple apertures (20A, 20B, 20C, 20D) extending i) through the rigid skin (19) applied to the second rigid board (18), the second rigid board (18) and the back surface (B) and ii) into the three-dimensional core (14) a depth that is less than a thickness of the three-dimensional core (14), the multiple apertures having a diameter D; and
   an insert (26), formed of a flexible material, that is complementarily shaped with the apertures (20) and that is to be inserted into any one of the multiple apertures (20), the insert (26) having a diameter d larger than the diameter D of the multiple apertures within less than 1 mm of the diameter D, the insert (26) having a mount receiving portion (30) formed therein.

2. The display board as defined in claim 1 wherein:

   the three-dimensional core (14) is a polymer foam core formed of extruded polystyrene foam having an additive and a blowing agent therein; and
   the respective rigid skins (17, 19) are formed of a melamine resin.

3. The display board as defined in claim 2 wherein the polymer foam core, the first rigid board, and the second rigid board each has a Brinell hardness, and wherein a ratio of the Brinell hardness of the first rigid board or the second rigid board to the Brinell hardness of the polymer foam core ranges from 80 to 20.

4. The display board as defined in claim 1, further comprising a mount (34, 34') having two opposed ends (38, 40 and 38', 40'), one of the two opposed ends having a threaded portion to be removably secured within the mount receiving portion of the insert and an other of the two opposed ends being pointed or rounded.

5. The display board as defined in claim 4, further comprising a slot (22) formed in the back surface that is accessible through the rigid skin (19) applied to the second rigid board (18) and the second rigid board (18), the slot (22) to removably store the mount (34).

6. The display board as defined in claim 1, further comprising a wall mount (46) have two opposed ends, one of the two opposed ends to be removably secured within the mount receiving portion of the insert and an other of the two opposed ends to be secured to a wall.

7. The display board as defined in claim 1 wherein the mount receiving portion (30) of the insert includes a female thread (32).

8. The display board as defined in claim 1, further comprising:

   an adhesive established on the first rigid board; and
   a release liner removably positioned on the adhesive.

9. The display board as defined in claim 1 wherein a density of the three-dimensional core ranges from 28 kg/m$^3$ to 45 kg/m$^3$.

10. An art piece (100), comprising:

    a display board according to any of the above claims;
    an image receiving medium (48) to receive a personalized digital printed image thereon, the image receiving medium including a digital ink/toner receiving layer or having a digital ink/toner receiving surface structure; and

a securing mechanism to attach the image receiving medium to at least the rigid skin applied to the first rigid board (16).

11. The art piece as defined in claim 10, further comprising a trim piece (56, 56') to be secured to a perimeter of the core structure.

12. The art piece as defined in claim 10 wherein the image receiving medium (48) is to be secured to a perimeter of the core structure (10).

13. The art piece as defined in claim 10 wherein the art piece is mat-less.

14. A method for making an art piece(100) according to any of claims 10 to 13, comprising:

digitally printing an image on an image receiving medium (48) including a digital ink/toner receiving layer or having a digital ink/toner receiving surface structure;
aligning the image receiving medium (48) with a core structure (12) including:

a polymer foam core (14) having front surface (F) and a back surface (B);
a first rigid board (16) attached to the front surface (F);
a second rigid board (18) attached to the back surface (B); and
respective rigid skins (17, 19) applied to an exposed surface of each of the first rigid board (16) and the second rigid board (18);

securing the image receiving medium (48) to the rigid skin (17) applied to the first rigid board (16); and
placing an insert (26) into any one of a multitude of apertures of diameter D that extend i) through the rigid skin (19) applied to the second rigid board (18), the second rigid board (18) and the back surface (B) and ii) into the polymer foam core a depth that is less than a thickness of the polymer foam core (14), the insert (26) being formed of a flexible material, that is complementarily shaped with the apertures (20) and has a diameter d larger than the diameter D of the apertures within less than 1 mm of the diameter D, the insert (26) further having having a mount receiving portion (30) formed therein.

**Patentansprüche**

1. Anzeigetafel (10), die Folgendes umfasst:
eine Kernstruktur (12), die Folgendes beinhaltet:

einen dreidimensionalen Kern (14), der eine vordere Oberfläche (F) und eine hintere Oberfläche (B) aufweist;
eine erste starre Tafel (16), die an der vorderen Oberfläche (F) befestigt ist;
eine zweite starre Tafel (18), die an der hinteren Oberfläche (B) befestigt ist; und
jeweilige starre Schalen (17, 19), die auf einer freiliegenden Oberfläche jeder der ersten starren Tafel (16) und der zweiten starren Tafel (18) angebracht sind;
mehrere Öffnungen (20A, 20B, 20C, 20D), die sich i) durch die starre Schale (19), die auf der zweiten starren Tafel (18) angebracht ist, die zweite starre Tafel (18) und die hintere Oberfläche (B) und ii) in den dreidimensionalen Kern (14) in einer Tiefe erstrecken, die kleiner als eine Dicke des dreidimensionalen Kerns (14) ist, wobei die mehreren Öffnungen einen Durchmesser D aufweisen; und
einen Einsatz (26), der aus einem flexiblen Material ausgebildet ist, komplementär zu den Öffnungen (20) geformt ist und der in eine der mehreren Öffnungen (20) eingesetzt werden soll, wobei der Einsatz (26) einen Durchmesser d aufweist, der größer als der Durchmesser D der mehreren Öffnungen innerhalb von weniger als 1 mm des Durchmessers D ist, wobei der Einsatz (26) einen darin ausgebildeten Halterungsaufnahmeabschnitt (30) aufweist.

2. Anzeigetafel nach Anspruch 1, wobei:

der dreidimensionale Kern (14) ein Polymerschaumkern ist, der aus extrudiertem Polystyrolschaum ausgebildet ist, der ein Additiv und ein Treibmittel darin aufweist; und
die jeweiligen starren Schalen (17, 19) aus einem Melaminharz ausgebildet sind.

3. Anzeigetafel nach Anspruch 2, wobei der Polymerschaumkern, die erste starre Tafel und die zweite starre Tafel jeweils eine Brinellhärte aufweisen und wobei ein Verhältnis der Brinellhärte der ersten starren Tafel oder der zweiten starren Tafel zu der Brinellhärte des Polymerschaumkerns von 80 bis 20 reicht.

4. Anzeigetafel nach Anspruch 1, die ferner eine Halterung (34, 34') umfasst, die zwei gegenüberliegende Enden (38, 40 und 38', 40') aufweist, wobei eines der zwei gegenüberliegenden Enden einen Gewindeabschnitt aufweist, der in dem Halterungsaufnahmeabschnitt des Einsatzes entfernbar gesichert sein soll, und ein anderes der zwei gegenüberliegenden Enden spitz oder abgerundet ist.

5. Anzeigetafel nach Anspruch 4, die ferner einen Schlitz (22) umfasst, der in der hinteren Oberfläche ausbildet ist, auf den durch die starre Schale (19), die auf der zweiten starren Tafel (18) angebracht ist, und die zweite starre Tafel (18) zugegriffen werden kann, wobei der Schlitz (22) die Halterung (34) entfernbar lagern soll.

6. Anzeigetafel nach Anspruch 1, die ferner eine Wandhalterung (46) umfasst, die zwei gegenüberliegende Enden aufweist, wobei eines der zwei gegenüberliegenden Enden in dem Halterungsaufnahmeabschnitt des Einsatzes entfernbar gesichert sein soll und ein anderes der zwei gegenüberliegenden Enden an einer Wand gesichert werden soll.

7. Anzeigetafel nach Anspruch 1, wobei der Halterungsaufnahmeabschnitt (30) des Einsatzes ein Innengewinde (32) beinhaltet.

8. Anzeigetafel nach Anspruch 1, die ferner Folgendes umfasst:

   einen Klebstoff, der auf der ersten starren Tafel aufgebracht ist; und
   eine Trennlage, die auf dem Klebstoff entfernbar positioniert ist.

9. Anzeigetafel nach Anspruch 1, wobei eine Dichte des dreidimensionalen Kerns von 28 kg/m$^3$ bis 45 kg/m$^3$ reicht.

10. Kunstobjekt (100), das Folgendes umfasst:

    eine Anzeigetafel nach einem der obigen Ansprüche;
    ein Bildempfangsmedium (48), um ein personalisiertes digitales gedrucktes Bild darauf zu empfangen, wobei das Bildempfangsmedium eine digitale Tinten-/Tonerempfangsschicht beinhaltet oder eine digitale Tinten-/Tonerempfangsoberflächenstruktur aufweist; und
    einen Sicherungsmechanismus, um das Bildempfangsmedium an wenigstens der starren Schale zu befestigen, die auf der ersten starren Tafel (16) angebracht ist.

11. Kunstobjekt nach Anspruch 10, das ferner ein Verkleidungsstück (56, 56') umfasst, das an einem Umfang der Kernstruktur gesichert sein soll.

12. Kunstobjekt nach Anspruch 10, wobei das Bildempfangsmedium (48) an einem Umfang der Kernstruktur (10) gesichert sein soll.

13. Kunstobjekt nach Anspruch 10, wobei das Kunstobjekt verfeinerungsfrei ist.

14. Verfahren zum Herstellen eines Kunstobjekts (100) nach einem der Ansprüche 10 bis 13, das Folgendes umfasst:

    digitales Drucken eines Bildes auf ein Bildempfangsmedium (48), das eine digitale Tinten-/Tonerempfangsschicht beinhaltet oder eine digitale Tinten-/Tonerempfangsoberflächenstruktur aufweist;
    Ausrichten des Bildempfangsmediums (48) an einer Kernstruktur (12), die Folgendes beinhaltet:

       einen Polymerschaumkern (14), der eine vordere Oberfläche (F) und eine hintere Oberfläche (B) aufweist;
       eine erste starre Tafel (16), die an der vorderen Oberfläche (F) befestigt wird;
       eine zweite starre Tafel (18), die an der hinteren Oberfläche (B) befestigt wird; und

    jeweilige starre Schalen (17, 19), die auf einer freiliegenden Oberfläche jeder der ersten starren Tafel (16) und der zweiten starren Tafel (18) angebracht werden;
    Sichern des Bildempfangsmediums (48) an der starren Schale (17), die auf der ersten starren Tafel (16) angebracht wird; und

Platzieren eines Einsatzes (26) in eine von mehreren Öffnungen des Durchmessers D, die sich i) durch die starre Schale (19), die auf der zweiten starren Tafel (18) angebracht wird, die zweite starre Tafel (18) und die hintere Oberfläche (B) und ii) in den Polymerschaumkern in einer Tiefe erstrecken, die kleiner als eine Dicke des Polymerschaumkerns (14) ist, wobei der Einsatz (26) aus einem flexiblen Material ausgebildet wird, komplementär zu den Öffnungen (20) geformt ist und einen Durchmesser d aufweist, der größer als der Durchmesser D der Öffnungen innerhalb von weniger als 1 mm des Durchmessers D ist, wobei der Einsatz (26) ferner einen darin ausgebildeten Halterungsaufnahmeabschnitt (30) aufweist.

**Revendications**

1. Plaque de présentation (10), comprenant :

   une structure centrale (12), comportant :

   une partie centrale en trois dimensions (14) ayant une surface avant (F) et une surface arrière (B) ;
   une première plaque rigide (16) fixée à la surface avant (F) ;
   une seconde plaque rigide (18) fixée à la surface arrière (B) ; et
   des peaux rigides respectives (17, 19) appliquées à une surface exposée de chacune de la première plaque rigide (16) et de la seconde plaque rigide (18) ;

   des ouvertures multiples (20A, 20B, 20C, 20D) s'étendant i) à travers la peau rigide (19) appliquée à la seconde plaque rigide (18), la seconde plaque rigide (18) et la surface arrière (B) et ii) à l'intérieur de la partie centrale en trois dimensions (14) sur une profondeur qui est inférieure à une épaisseur de la partie centrale en trois dimensions (14), les ouvertures multiples ayant un diamètre D ; et
   un insert (26), formé d'un matériau flexible, qui est de forme complémentaire avec les ouvertures (20) et qui doit être inséré dans l'une quelconque des ouvertures multiples (20), l'insert (26) ayant un diamètre d supérieur au diamètre D des multiples ouvertures à moins d'1 mm du diamètre D, l'insert (26) ayant une partie de réception de monture (30) formée à l'intérieur.

2. Plaque de présentation selon la revendication 1 :

   la partie centrale en trois dimensions (14) étant une partie centrale en mousse polymère formée de mousse de polystyrène extrudé contenant un additif et un agent gonflant ; et
   les peaux rigides respectives (17, 19) étant formées d'une résine mélamine.

3. Plaque de présentation selon la revendication 2, la partie centrale en mousse polymère, la première plaque rigide et la seconde plaque rigide ayant chacune une dureté Brinell, et un rapport de la dureté Brinell de la première plaque rigide ou de la seconde plaque rigide avec la dureté Brinell de la partie centrale en mousse polymère variant de 80 à 20.

4. Plaque de présentation selon la revendication 1, comprenant en outre une monture (34, 34') ayant deux extrémités opposées (38, 40 et 38', 40'), l'une des deux extrémités opposées ayant une partie filetée à fixer de manière amovible à l'intérieur de la partie de réception de monture de l'insert et une autre des deux extrémités opposées étant pointue ou arrondie.

5. Plaque de présentation selon la revendication 4, comprenant en outre une fente (22) formée dans la surface arrière qui est accessible à travers la peau rigide (19) appliquée sur la seconde plaque rigide (18) et la seconde plaque rigide (18), la fente (22) étant pour stocker de manière amovible la monture (34).

6. Plaque de présentation selon la revendication 1, comprenant en outre une monture murale (46) ayant deux extrémités opposées, l'une des deux extrémités opposées devant être fixée de manière amovible dans la partie de réception de monture de l'insert et une autre des deux extrémités opposées à fixer au mur.

7. Plaque de présentation selon la revendication 1, la partie de réception de monture (30) de l'insert comprenant un filetage femelle (32).

8. Plaque de présentation selon la revendication 1, comprenant en outre :

un adhésif établi sur la première plaque rigide ; et
une doublure détachable positionnée de manière amovible sur l'adhésif.

**9.** Plaque de présentation selon la revendication 1, une densité de la partie centrale en trois dimensions étant comprise de 28 kg/m$^3$ à 45 kg/m$^3$.

**10.** Œuvre d'art (100), comprenant :

une plaque de présentation selon l'une quelconque des revendications ci-dessus ;
un support de réception d'image (48) pour recevoir une image imprimée numérique personnalisée sur celui-ci, le support de réception d'image comportant une couche de réception d'encre/d'encre en poudre numérique ou ayant une structure de surface de réception d'encre/d'encre en poudre numérique ; et
un mécanisme de fixation pour attacher le support de réception d'image à au moins la peau rigide appliquée à la première plaque rigide (16).

**11.** Œuvre d'art selon la revendication 10, comprenant en outre une pièce de garniture (56, 56') à fixer sur un périmètre de la structure centrale.

**12.** Œuvre d'art selon la revendication 10, le support de réception d'image (48) étant fixé à un périmètre de la structure centrale (10).

**13.** Œuvre d'art selon la revendication 10, l'œuvre d'art étant sans passe-partout.

**14.** Procédé de fabrication d'une œuvre d'art (100) selon l'une quelconque des revendications 10 à 13, comprenant :

l'impression numérique d'une image sur un support de réception d'image (48) comprenant une couche de réception d'encre/d'encre en poudre numérique ou ayant une structure de surface de réception d'encre/d'encre en poudre numérique ;
l'alignement du support de réception d'image (48) avec une structure centrale (12) comportant :

une partie centrale en mousse polymère (14) ayant une surface avant (F) et une surface arrière (B) ;
une première plaque rigide (16) fixée à la surface avant (F) ;
une seconde plaque rigide (18) fixée à la surface arrière (B) ; et
des peaux rigides respectives (17, 19) appliquées à une surface exposée de chacune de la première plaque rigide (16) et de la seconde plaque rigide (18) ;

la fixation du support de réception d'image (48) à la peau rigide (17) appliquée à la première plaque rigide (16) ; et
le placement d'un insert (26) dans l'une quelconque d'une multitude d'ouvertures de diamètre D qui s'étendent i) à travers la peau rigide (19) appliquée sur la seconde plaque rigide (18), la seconde plaque rigide (18) et la surface arrière (B) et ii) dans la partie centrale en mousse polymère sur une profondeur qui est inférieure à une épaisseur de la partie centrale en mousse polymère (14), l'insert (26) étant formé d'un matériau flexible, qui est de forme complémentaire avec les ouvertures (20) et a un diamètre d supérieur au diamètre D des ouvertures à moins d'1 mm du diamètre D, l'insert (26) ayant en outre une partie de réception de monture (30) formée à l'intérieur.

_Fig-1_

_Fig-2_

_Fig-3A_

_Fig-3B_

_Fig-4_

_Fig-5_

*Fig-6*

*Fig-7*

**EP 2 872 339 B1**

**REFERENCES CITED IN THE DESCRIPTION**

**Patent documents cited in the description**

- US 20110146126 A1

- EP 2210533 A1